# NEUE EUROPÄISCHE PATENTSCHRIFT

(11) **EP 3 142 980 B2**
(45) Veröffentlichungstag und Bekanntmachung des Hinweises auf die Entscheidung über den Einspruch: **10.07.2024**
(45) Hinweis auf die Patenterteilung: 09.01.2019
(21) Anmeldenummer: 15747087.3
(22) Anmeldetag: 09.05.2015
(51) Int. Cl.: C04B 14/06, C04B 18/02

(54) **VERFAHREN UND VORRICHTUNG ZUR HERSTELLUNG VON KÜNSTLICHEM BRECHSAND BZW. QUETSCHSAND DURCH THERMISCHE BEHANDLUNG UNTER DER VERWENDUNG VON SAND IN FORM VON FEINSAND UND/ODER RUNDSAND ALS AUSGANGSSTOFF.**
METHOD AND DEVICE FOR PRODUCING ARTIFICIAL CRUSHED SAND BY MEANS OF A THERMAL TREATMENT USING SAND IN THE FORM OF FINE SAND AND/OR ROUND SAND AS THE STARTING MATERIAL
PROCÉDÉ ET DISPOSITIF POUR LA FABRICATION DE SABLE DE CONCASSAGE OU SABLE DE BROYAGE ARTIFICIEL PAR TRAITEMENT THERMIQUE AVEC UTILISATION DE SABLE FIN ET/OU DE SABLE ROULÉ COMME MATIÈRE DE DÉPART

(30) Priorität: 10.05.2014 DE 102014006942; 21.12.2014 DE 102014019319
(43) Veröffentlichungstag der Anmeldung: 22.03.2017
(73) Patentinhaber: Black Ramel Ltd., 1171 Valletta (MT)
(72) Erfinder: BEHNISCH, Dennis, 86420 Diedorf (DE); IKIC, Jovan, 86356 Neusäß (DE)
(74) Vertreter: Dehns Germany Partnerschaft mbB
(86) Internationale Anmeldenummer: PCT/DE2015/000238
(87) Internationale Veröffentlichungsnummer: WO 2015/172765

(56) Entgegenhaltungen:
- WO-A2-2010/149177
- CN-A- 101 987 475
- CN-A- 101 987 475
- CN-A- 102 877 457
- CN-A- 102 877 459
- DE-C2- 3 248 537
- JP-A- S5 826 070
- KAYSER, M., SOLAR SINTER, 2011, Retrieved from the Internet <URL:http://www.markuskavser.com/work/solarsinter>
- Retrieved from the Internet <URL:https://kayserworks.com/#/798817030644>
- https://netzkonstrukteur de/solar-sinter-3d-druck-mit-der-kraft-der-sonne/
- Retrieved from the Internet <URL:https://www.dezeen.com/ 2011/06/28 /the-solar-sinter-bv-markus-kavser>
- HAYDN, J., SOLAR SAND CONVERTER - SOLVING THE SAND PROBLEM, 11 April 2015 (2015-04-11), Retrieved from the Internet <URL:https://hackadav.io/proiect/5230-solar-sand- converter-solvinq-the-sand-problem>
- HAYDN, J., MEASURING EXTREME TEMPERATURES, 30 April 2015 (2015-04-30), Retrieved from the Internet <URL:https://hackadav.io/proiect/5537-measurinq-extreme-temperatures>
- Solar Sand Converter - Solving the sand problem,https://hackadav.io/proiect/5230-solar-sand-converter-solvinq-the-sand-pr...
- BANSAL, N. P. ET AL.: "Properties of Desert Sand and CMAS Glass", NASA STI PROGRAM, August 2014 (2014-08-01)
- Internetveroffentlichung https://www.forum-3dcenter.org/vbulletin/showthread.php?t=557415
- S P GAUTAM ET AL: "Use of glass wastes as fine aggregate in Concrete", J. ACAD. INDUS. RES, 30 November 2012 (2012-11-30), pages 320 - 322, XP055210231, Retrieved from the Internet <URL:http://jairjp.com/NOVEMBER 2012/10 GOWTHAM.pdf> [retrieved on 20150831]

## Beschreibung

Die Erfindung betrifft ein Verfahren und eine Vorrichtung zur Herstellung von künstlichem Brechsand bzw. Quetschsand durch thermische Behandlung unter der Verwendung von Sand in Form von Feinsand (fS/FSa) und/oder Rundsand als Ausgangsstoff.

Die Bezeichnung Sand findet laut Definition Anwendung bei sämtlichen nicht verfestigten Gesteinssedimenten, die sich aus einzelnen Mineralkörnern mit einer Korngröße von 0,063 bis 2 mm zusammensetzen. Nach DIN4022 werden die verschiedenen Sandarten anhand ihrer Korngröße, Oberfläche und Form unterschieden. Je nach Korngrößenverteilung, wird der Sand den Kategorien Feinsand (fS/FSa), Mittelsand (mS/MSa) oder Grobsand (gS/CSa) zugewiesen. Eine weitere Unterteilung der Sande wird durch die Begriffe "Rundsande" und "kantige Sande" getroffen. Rundsande bestehen primär aus rundlichen Komponenten. Sie sind primär in Wüstengebieten zu finden und bewegen sich überwiegend im Korngrößenbereich der Feinsande (fS/FSa). Die kantigen Sande werden nochmals in die natürlich vorkommenden Bruchsande und die künstlich hergestellten Brechsande, die sog. Quetschsande unterteilt. Natürliche Bruchsande werden hauptsächlich durch die Förderung von Meeresböden und Flussbetten gewonnen.

Die enorm große und stetig wachsende Nachfrage von Beton lässt auch den Bedarf an Sand stark steigen. Denn Beton besteht zu rund 70% aus Gesteinskörnung und zu den restlichen 30% aus Wasser und Zement. Die Gesteinskörnung im Beton, auch als Zuschläge bezeichnet, setzt sich aus Kies und Sand im Korngrößenbereich von 0,025 bis 16 oder 32 mm - je nach Sieblinie - zusammen. Im Mittel weisen diese Zuschläge rund 30% Feinkornanteil, also Körnungen kleiner als 2 mm, auf. Beton besteht also zu rund 21% aus Sand. Die Feinkornanteile des Betons variieren mit seinem Einsatzgebiet: Die bereits erwähnte Sieblinie des Betons gibt Aufschluss über die genaue Zusammensetzung der Zuschläge. Der Fachmann spricht bei den Feinkornanteilen der Gesteinskörnung vom sog. "gebrochenen Korn". Die Verwendung von gebrochenen Sanden als Feinkornzuschläge ist von zentraler Bedeutung für die Festigkeit des Betons, denn nur diese Körner ermöglichen ein gegenseitiges Verkeilen, wodurch der Beton von innen gestützt wird.

Es ist bekannt, dass sich die mineralogische Zusammensetzung von Wüstensand und Küstensand v.a. in zwei Punkten grundsätzlich unterscheidet. Während das durchschnittliche Küstensandkorn in der Regel dem Bereich Mittelsand (mS/MSa) bis Grobsand (gS/CSa) zugeordnet wird und gleichzeitig eine kantige Form und raue Oberfläche aufweist, handelt es sich bei Wüstensandkörnern in der Regel um Mineralkörner der Kategorie Feinsand (fS/FSa) mit hauptsächlich gerundeter Geometrie und glatter Oberfläche. Die genannten Unterschiede der Mineralkörner von Küstensand und Wüstensand lassen sich einfach durch die deutlich stärkere Verwitterung der Wüstensandkörner erklären, welche sich durch permanente Windverwehungen und Rollbewegungen gegenseitig abschleifen, sodass sie stetig kleiner, runder und glatter werden.

Es ist außerdem bekannt, dass diese scheinbar unwesentlichen Unterschiede v.a. die Bauindustrie vor große Probleme stellen, denn der Wüstensand eignet sich aufgrund der ungünstigen Korneigenschaften nicht zum Aufschütten von Neuland im Meer und auch nicht als Feinkornzuschlag bei der Beton- und Zementherstellung (vgl. DELESTRAC, D. (Regisseur) (2013). Sand - Die neue Umweltzeitbombe. [Dokumentation]. Frankreich: ARTE). Bisher werden höchstens kleine Anteile der Feinkorn-Zuschläge durch Wüstensand ersetzt - die schlichte Verwendung von Wüstensand an Stelle des Küstensandes ist technisch nicht möglich.

Nachdem die Quellen von natürlich vorkommenden Bruchsanden zu Land weitgehend erschöpft sind und gleichzeitig der Sand in den riesigen Wüsten - die sich zudem immer weiter ausbreiten - nicht zur Betonherstellung geeignet ist, bleibt nur das Abpumpen des Sandes vom Meeresgrund. Dabei wird die Vegetation stark beschädigt. Gleichzeitig steigt die Gefahr von Naturkatastrophen, was vor allem ein Risiko für die Küstenbewohner darstellt. Der salzhaltige Meeressand muss außerdem vor dem Einsatz als Zuschlag bei der Betonherstellung aufwändig gereinigt werden, da ein zu hoher Salzgehalt die Korrosion (v.a. bei Stahlbeton) enorm beschleunigt.

Es soll ein umweltfreundliches und massentaugliches Verfahren zur Erzeugung von Quetschsand entwickelt werden, um den Mangel an natürlichen Bruchsanden zu decken und die fortwährende Belastung der Küstengebiete zu stoppen.

Im Stand der Technik finden folgende Methoden Anwendung, um den rasant zunehmenden Mangel an Brechsand bzw. Quetschsand, insbesondere kantigem Mittelsand (mS/MSa) zu decken. Momentan versucht man den Abbau von Küstensand und Meeressand mit rechtlichen Schritten einzudämmen, wodurch die Preise für Sand tendenziell steigen und gleichzeitig illegale Abbaugeschäfte in den Vordergrund treten. Ein großer Sektor ist die Erzeugung von Quetschsand, also künstlichem Brechsand durch die Zerkleinerung von Kies und Geröll in sehr großen Brechern. Dieses Verfahren dient zwar der künstlichen Erzeugung von Brechsand (Quetschsand), allerdings müssen hierbei größere Gesteinssedimente zerbrochen werden, womit dieser Prozess die Ausbreitung der Wüsten vorantreibt. Gleichzeitig liegt der Preis von Quetschsand deutlich über dem Preis natürlicher Brechsande (Küstensand), da ein enormer Energieaufwand für die teuren, leistungsstarken Zerkleinerungsmaschinen aufgebracht werden muss. Im Gegensatz dazu, stellt das Recycling von Altglas einen deutlich effektiveren Lösungsansatz dar, denn durch das Zerkleinern und Zerteilen von Glasabfällen lässt sich künstlicher Brechsand herstellen, der u.a. für die Betonherstellung geeignet ist. Dieses Verfahren ist jedoch aus logistischen Gründen nicht befähigt, die erforderten Sandmassen, die weltweit zur Betonherstellung benötigt werden, aufzubringen. Darüber hinaus begeben sich zunehmend Forschungsteams auf die Suche nach Methoden zur Beschleunigung des natürlichen Verwitterungsprozesses. Ansätze dafür sind das Beschießen von Gesteinsbrocken mit Hochspannungsblitzen, um das Endprodukt Sand zu erreichen (JÜNGLING, T. (2014). Die lebensnotwendige Jagd nach mehr Sand [online]. Verfügbar unter: http://www.welt.de/wirtschaft/webwelt/articlel27216019/Dielebensnotwendige-Jagd-nach-mehr-Sand.html [01.05.2014]). Diese Methode ist, wenn überhaupt, nur eine mittelfristige Lösung, denn sie beschleunigt ebenfalls die Ausbreitung der Wüsten. Eines Tages wird auf diese Weise ein Mangel an Gestein zur Beschießung entstehen - genau wie bei der Erzeugung von Quetschsand aus Kies und Geröll. Die erheblichen Energiemengen zur Erzeugung der Hochspannungsblitze, lässt diese Methode gänzlich ausscheiden. Der letzte wichtige Forschungsbereich liegt in der Bauchemie, um vor allem synthetische Ersatzstoffe zu Sand und dafür geeignete Bindemittel zu finden. Man versucht durch die Veränderung des Zementleims, Wüstensand oder andere synthetische Stoffe für die Betonherstellung zu erschließen und zu finden.

Keine der genannten Methoden bietet eine massentaugliche, umweltfreundliche Lösung zur Deckung des Sandbedarfs. Dabei greift keine der Methoden das Problem an der Stelle an, wie sie nun in der Erfindung vorgestellt wird. Es muss ein Verfahren entwickelt werden, um die riesigen Sandvorkommen in den Wüsten sowohl für die Betonherstellung als auch für die Verwendung bei der Neulandgewinnung nutzbar zu machen.

Ausgehend von diesem Stand der Technik werden ein Verfahren und eine Vorrichtung zur Herstellung von künstlichem Brechsand bzw. Quetschsand durch thermische Behandlung unter der Verwendung von Sand in Form von Feinsand (fS/FSa) und/oder Rundsand als Ausgangsstoff mit den Merkmalen der unabhängigen Patentansprüche vorgeschlagen. Wüstensand - welcher aufgrund seiner genannten Eigenschaften auch als Feinsand (fS/FSa) und Rundsand zu bezeichnen ist - wird dabei zunächst zu einem Zwischenprodukt verschmolzen, das entstandene Konglomerat anschließend wieder zerbrochen, so dass man als Endprodukt Brechsand bzw. Quetschsand, insbesondere kantigen Mittelsand (mS/MSa) erhält.

Aus der DE 3248537 C2 ist ein Verfahren bekannt, bei dem Sinterformkörper aus Quarzsand erzeugt werden, welche eine geringe Dichte und gleichzeitig hohe Festigkeit aufweisen. Nach dem Verfahren wird zunächst Quarzsand in bestimmte Formen gefüllt. Diese Formen sind in einer bevorzugten Ausführungsform elektrisch leitend ausgeführt, sodass innerhalb der Formen ein elektrisches Hochspannungsfeld angelegt werden kann, welches bis zum Sintervorgang aufrechterhalten werden muss. Durch die Einwirkung des elektrischen Feldes nehmen die einzelnen Sandkörner in der Sinterform eine bestimmte Raumordnung mit relativ hoher Porosität ein. Diese hohe Porosität ist später maßgeblich für die geringe Dichte des Sinterformkörpers. Im abschließenden Sintervorgang wird der Quarzsand innerhalb der Form, bei Temperaturen deutlich unterhalb des Schmelzpunktes gesintert. In der DE 19516867 A1 werden die Parameter des Verfahrens aus der DE 3248537 C2, zur Erzeugung von Sinterformkörpern geringer Dichte, nochmals überarbeitet und einige falsche Annahmen korrigiert. Der Temperaturbereich des Sintervorgangs liegt demnach nicht bei den ursprünglich angenommenen 1400 - 1650 °C, sondern deutlich tiefer bei 1250 - 1350 °C. Die Zusammensetzung des Ausgangsstoffes ist ebenso genauer definiert worden und auf Zusammensetzungen zwischen 50 - 75% SiO₂ bei 50 - 25% Al₂O₃ begrenzt worden. Die so erhaltenen Sinterformkörper lassen sich vielseitig als Fließen, Kacheln, Ziegel und als andere Baumaterialien einsetzen, bieten jedoch keinen Ersatz für die Feinkorn-Zuschläge im Beton. Selbst bei der Zerkleinerung dieser Sinterformkörper auf Bruchteile kleiner 2 mm - welche in keiner der beiden Patentschriften angestrebt wird - erhielte man nicht den gewünschten kantigen Mittelsand (mS/MSa). Der Grund dafür liegt im Sinterprozess, denn bei Temperaturen von bis zu 1600 °C (Maximalwert aus der DE 3248537 C2) befindet man sich deutlich unterhalb des Schmelzpunktes von Sand (1713 °C). Die Sandkörner schmelzen nicht vollständig, sondern verbinden sich nur durch das Anschmelzen ihrer Oberflächen. Man spricht von Zusammenbacken. Dieses Zusammenbacken führt dazu, dass sich keine neuen Korngrenzen bilden. Beim späteren Zerkleinern, erhielte man also keinesfalls das gewünschte "gebrochene Korn", sondern lediglich erneut das Ausgangsprodukt, da das Konglomerat an seinen Verbindungsstellen aufbrechen würde. Eine Umwandlung des Wüstensandes findet hier, besonders bei den genannten Temperaturen, nicht statt. Das Schmelzen des Sandes und die Erzeugung neuer Korngrenzen ist bei keiner der Patentschriften angezielt und muss in Hinsicht auf ein erfolgreiches Endprodukt, nämlich Sinterformkörper geringer Dichte und hoher Festigkeit sogar unbedingt vermieden werden. Das Schmelzen der einzelnen Körner und damit die Erzeugung neuer Korngrenzen würde die Hohlräume, welche in unmittelbarem Zusammenhang mit der geringen Dichte stehen, zerstören und würde so zu einem Endprodukt von hoher Dichte führen, da die durch das elektrische Feld aufwändig erzeugte Porosität nicht aufrecht erhalten bliebe. Weitere Nachteile sind der unabdingliche Einsatz von (aufwändigen Graphit-) Formen, deren Befüll- und Entleerungsvorgänge einen diskontinuierlichen Handlungsschritt in dem ansonsten automatisierbaren Prozess darstellen. Für die Massenproduktion ist dieses Verfahren weniger, bei den in Bezug auf Sand erforderten Mengen sogar eher ungeeignet. Letztlich ist das Verfahren durch das Erzeugen und Aufrechterhalten eines elektrischen Hochspannungsfeldes, dem Betrieb der kontinuierlichen Tunnelöfen und der allgemein aufwändigen Konstruktion und Herstellung der Formen ein sehr kostenintensives und energieaufwändiges Verfahren. Sand, welcher in einem solchen Verfahren produziert würde, hätte demnach keine Aussichten auf gewinnbringenden Vertrieb.

Im Stand der Technik ist weiterhin ein ökonomischeres Verfahren des Sinterns von Sandkörnern bekannt. Im "Solar Sinter Project" von Markus Kayser wird Sand zur ästhetischen Formschöpfung unter Einwirkung von Sonnenenergie gesintert (vgl. KAYSER, M. (2011). Solar Sinter [online]. Verfügbar unter: http://www.markuskayser.com/work/solarsinter/ [01.05.2014]). Dort werden Sonnenstrahlen in einer Linse gebündelt und auf eine Sandschicht fokussiert, wodurch sich - vergleichbar mit den bekannten 3D-Druck-Verfahren - aus dem pulverförmigen Grundstoff räumliche Strukturen herstellen lassen. Dieses Verfahren stellt einen Teilprozess der in Patentanspruch 1 genannten Erfindung dar, mit dem grundlegenden Unterschied, dass in der Erfindung nach Patentanspruch 1 keine Sinterformkörper, sondern Schmelzkörper erzeugt werden. Sinterformkörper weisen die gleichen Nachteile auf, wie sie bereits oben zu der DE 3248537 C2 beschrieben wurden. Außerdem stellt das Verfahren im Solar Sinter Project keinesfalls die Erzeugung von kantigem Mittelsand (mS/MSa) bzw. Quetschsand in Aussicht, sondern begrenzt sich auf die Erzeugung von Sinterformkörpern, vorwiegend zur ästhetischen Formschöpfung.

CN 101 987 offenbart ein Verfahren zur Behandlung von Wüstensand wobei der Ausgangsstoff durch die Bündelung von Sonnenstrahlen auf eine Schmelztemperatur erhitzt wird und anschliessend das so entstandene Zwischenprodukt abgekühlt wird.

Keines der genannten Sinterverfahren bietet eine Methode zur Umwandlung von Wüstensand, also Rundsand bzw. Feinsand (fS/FSa) in kantigen Mittelsand (mS/MSa).

Die vorliegende Erfindung schafft einen vollwertigen Ersatz zu der endlichen Ressource, dem natürlichen Brechsand und ein wirtschaftlich umsetzbares und v.a. umweltfreundliches Verfahren zur Erzeugung des künstlichen Ersatzstoffes. Dieser Ersatzstoff, nachstehend als Brechsand bzw. Quetschsand, insbesondere als kantiger Mittelsand (mS/MSa) bezeichnet, stellt vor allem im Gebiet der Betonherstellung, sowie als Schüttgut zur Neulandgewinnung eine gute Alternative zur Verwendung von Küsten- und Meeressand, dem natürlichen Brechsand dar.

Vorzugsweise wechseln die zunächst runden, glatten Mineralkörner des Feinsandes (fS/FSa) (Wüstensand) durch den Schmelzprozess ihren Aggregatszustand und gehen in der flüssigen Phase eine gemeinsame Bindung ein, wodurch es zur Neubildung von Korngrenzen kommt. Beim Zerkleinern dieser Mineralkornverbunde auf Bruchstücke kleiner 2 mm erhält man Sand, dessen Mineralkörner eine zum Ausgangsstoff klar unterscheidbare Geometrie und Oberflächenbeschaffenheit aufweisen. Vorteilhafte Zerkleinerungsmaschinen können beispielsweise ein Schredder, eine Kegelmühle oder eine Rotorprallmühle sein, wie sie aus dem Recycling von Müll und Glas bekannt sind. Der Mineralkornverbund, ein dreidimensionales Gebilde, zerbricht willkürlich, wodurch sich Bruchteile mit kantiger Geometrie ausbilden. Diese kantige und eckige Form ermöglicht später im Baustoff (Beton sowie Schüttgut zur Neulandgewinnung) das Verkeilen der Körner untereinander. Die zweite wichtige Eigenschaft, die erhöhte Oberflächenrauheit, wird durch den thermischen Umformprozess realisiert. Das Erstarren des dreidimensionalen Sandkornverbundes nach dem Schmelzvorgang ist mit bekannten Prozessen des Umformens vergleichbar. Beim Umformen von Granulaten zu Metallen stellt man fest, dass die Oberflächenbeschaffenheit nach der Erstarrung aus der Schmelze meist nicht den hohen Anforderungen (in der Technik: glatte Oberflächen) genügt. Diese müssen fast ausschließlich in Schleifprozessen nachbearbeitet werden. In der Erfindung liegt dieses Prinzip in umgekehrter Reihenfolge vor. Der Ausgangsstoff weist durch die natürlichen Schleifprozesse, eine für die Anwendung im Beton zu glatte Oberfläche auf. Diese Oberflächenbeschaffenheit wurde durch ständiges Abschleifen der Sandkörner untereinander erzeugt, was auf Windverwehungen und die daraus resultierende Rollbewegungen zurückzuführen ist. Mit dem thermischen Umformen des Ausgangsstoffes verschlechtert sich seine Oberfläche. Mit anderen Worten, es vergrößert sich die Oberflächenrauheit. Hier geschieht dies allerdings zu Gunsten der Anforderung. Die größere Rauigkeit verhindert das Abgleiten von einzelnen Körnern aneinander und trägt somit ebenso zur Stabilisierung im Baustoff bei.

Der grundsätzliche Ersatz von herkömmlichem Küsten- und Meeressand durch Quetschsand nach dem genannten Herstellverfahren ist somit gewährleistet.

Vorteile des beschriebenen Verfahrens liegen zunächst in dem äußerst umweltfreundlichen Prozessablauf begründet, der komplett auf erneuerbare Energien zurückgreifen kann. Dabei werden in einer Variante der Erfindung nicht einmal Fotovoltaik-Felder, d.h. teure Halbleitertechnologie benötigt. Die unmittelbare Lage des Ausgangsproduktes Sand in den Gebieten der höchsten Sonneneinstrahlung spricht für Vorteile bei Transport und Lagerung des Ausgangsstoffes, sowie den hohen technischen Wirkungsgrad des Prozesses. Durch diese Erfindung gelingt es, die riesigen Sandvorkommen in den Wüstengebieten für den Bausektor und die Neulandgewinnung zu erschließen und dabei die Meeresvegetation zu schonen. Das erhöhte Risiko von Naturkatastrophen an Küstengebieten, hervorgerufen durch Abpumpen von Sand, kann somit drastisch reduziert werden. Gleichzeitig wird die zunehmende Ausbreitung der Wüsten gebremst.

Vorteilhafterweise wird der Ausgangsstoff mindestens so weit erwärmt, dass sich neue Korngrenzen ausbilden. Insbesondere dann kann der Zerfall zurück zum Ausgangsprodukt beim Zerkleinerungsprozess vermieden und ausgeschlossen werden. Es hat sich gezeigt, dass bei gewöhnlichen Umgebungsverhältnissen (Druck = 1 bar, Temperatur = 23°C), eine Temperatur von mindestens 1700 °C ausreichend ist, um das nötige dreidimensionale Gebilde herzustellen und sicherzugehen, dass sich neue Korngrenzen gebildet haben. In manchen Versuchen erhielt man allerdings auch erst bei Temperaturen deutlich oberhalb des Schmelzpunktes, ab ca. 1810°C das gewünschte Ergebnis. Die Methoden zur Erzeugung der Schmelztemperatur durch Bündelung der Sonnenstrahlen ermöglichen sehr hohe Temperaturen, jenseits 2000°C und können ohnehin nicht exakt eingestellt werden. Die Einstellung der gewünschten Schmelztemperatur ist also nur beim Einsatz der konventionellen Schmelzvorrichtungen relevant und sollte je nach genauer Zusammensetzung des Sandes und unter Betrachtung der Umgebungsparameter in einer vorangehenden Versuchsreihe genau bestimmt werden. An dieser Stelle sei erwähnt, dass die spätere Festigkeit des Betons oder des aufgeschütteten Neulandes stark vom Anteil des gebrochenen Korns im verwendeten Sand abhängt. Natürlich ist eine Sandmischung aus "gebrochenem" und "ungebrochenem" Korn denkbar, sie sollte jedoch beim Entstehungsprozess durch die richtige Schmelztemperatur vermieden werden.

Gemäß einer vorteilhaften Ausführung des Verfahrens wird das dreidimensionale Gebilde nach dem Schmelzprozess soweit abgekühlt, dass es im Zerkleinerungsprozess zu Sprödbrüchen kommt. Es hat sich gezeigt, dass das Gebilde vorzugsweise auf mindestens 600 °C abgekühlt werden sollte, um ein sprödbrüchiges Verhalten aufzuweisen. Eine zweckmäßige Beurteilung dieses sprödbrüchigen Verhaltens kann unter Verwendung der Ritzhärte-Skala (Mohs-Härtegrad) getroffen werden. Quarz, der Hauptbestandteil des Ausgangsstoffes weist in Normalbedingungen eine Ritzhärte von 7 auf. Ab einem Wert von 6 ist bewerkstelligt, dass es nicht zur plastischen Verformung kommt, bevor das Material bricht. Es ist dementsprechend vorteilhaft, das Zwischenprodukt bis zum Erreichen einer Ritzhärte von 6 oder höher abzukühlen. Der Wechsel des Aggregatszustandes von Flüssig (Schmelze) zu Fest (glasartiges, dreidimensionales Gebilde) geschieht nicht schlagartig, sondern durchläuft mehrere Phasen. Bei Temperaturen höher 1600 °C ist das Gebilde flüssig bis zähflüssig. Bis zu einer Temperatur von 1200 °C hat es einen breiigen Zustand, der in manchen Zerkleinerungsmaschinen zum Verstopfen führen würde. Zwischen 600 °C und 1200 °C ist das Gebilde scheinbar fest, das Resultat beim Zerkleinern ist aber nicht zwangsläufig erfolgreich. Erfolgreiche Resultate wurden überwiegend beim Abkühlen auf unter 600°C erzielt. Um sicherzugehen, empfiehlt sich das komplette Abkühlen auf Umgebungstemperatur.

Gemäß einer bevorzugten Ausführungsform wird die Schmelztemperatur durch die Bündelung von Sonnenstrahlen mit Hilfe mindestens einer Sammellinse und/oder mindestens eines Spiegels erzeugt. Beide Systeme verfolgen ein ähnliches Prinzip, wodurch Sonnenstrahlen aufgefangen und gebündelt werden. Die höchsten Temperaturen werden im Brennpunkt, also dem Schnittpunkt der gebündelten Sonnenstrahlen erreicht. Sowohl mit einer Sammellinse als auch mit dem bzw. den Spiegel/n lassen sich in diesem Brennpunkt problemlos Temperaturen von mehr als 2000 °C erzeugen.

Der bzw. die Spiegel sind in einer bevorzugten Ausführungsform als mindestens ein Parabolspiegel bzw. als Anordnung von mindestens zwei Spiegeln mit unterschiedlichen Neigungswinkeln ausgeführt, um das Sonnenlicht auf einen gemeinsamen Punkt bzw. Schnittbereich zu konzentrieren. Vorteilhaft ist der Einsatz von vielen kleineren Spiegeln, z.B. 100 Spiegel mit einer Fläche von 0,4 Quadratmetern, um damit Leistungen bis über 1000 Watt pro Quadratmeter auf die Bearbeitungsfläche zur thermischen Behandlung des Ausgangsstoffes zu konzentrieren. Die Summe der unterschiedlich geneigten Spiegel wird vom Fachmann als Konzentrator bezeichnet.

Eine Weiterbildung der Erfindung stellt der Einsatz von reflektierenden Planspiegeln dar, die, insbesondere automatisch, nach dem Sonnenstand ausgerichtet werden und das Licht so auf den bzw. die Spiegel und/oder die Sammellinsen abbilden. Damit steigt die Effizienz des Systems, da die eigentliche Brennvorrichtung nicht beweglich ausgebildet werden muss um dem Sonnenstand zu folgen. Das hat zur Folge, dass der Brennpunkt ebenfalls nicht entlang der Bearbeitungsfläche wandert, sodass die hohe Temperatur gezielt auf einem Fixpunkt erzeugt werden kann. Der Fachmann bezeichnet diese Planspiegel als Heliostatenfelder. Die Kombination aus Heliostatenfeld und Parabolspiegel findet z.B. im Solarschmelzofen *"Centre du Four Solaire Felix Trombe"* im französischen Odeillo Anwendung.

Gemäß einer vorteilhaften Weiterbildung wird der Ausgangsstoff zunächst entweder in Variante C durch die Bündelung von Sonnenstrahlen und/oder wie in Variante D gezeigt durch den Einsatz einer konventionellen Heizvorrichtung, welche ihre Energieversorgung über umgewandelte oder gespeicherte Sonnenkraft erlangt auf eine Vorwärmtemperatur erhitzt, wobei die Vorwärmtemperatur unterhalb der Schmelztemperatur liegt und das Erhitzen auf die Vorwärmtemperatur örtlich getrennt vom Erhitzen auf die Schmelztemperatur durchgeführt wird. Durch die Erhitzung des Ausgangsstoffes auf eine Vorwärmtemperatur von beispielsweise 1000 °C vor dem eigentlichen Schmelzprozess, kann die Dauer des Prozesses bei konstanter Masse des Ausgangsstoffes annähernd halbiert werden. Es ist daher vorteilhaft, den Ausgangsstoff in einer ersten thermischen Behandlung entweder über einen Tunnelofen oder einer Vorrichtung zur Bündelung von Sonnenstrahlen zu erwärmen. Es empfiehlt sich dabei, den Ausgangsstoff in letzterer Variante oberhalb des Brennpunktes zu positionieren, da somit eine größere Flächenwirkung erzielt werden kann und die im Brennpunkt erzielbare, maximale Leistung der Anlage beim Vorwärmen meist nicht benötigt wird. Der Einsatz von konzentrierenden Spiegeln kann aufgrund der besseren Verteilungs- und Überschneidungsmöglichkeiten in Hinblick auf die Wirkbereiche sinnvoller sein als der Einsatz von Sammellinsen. Als Wirkbereiche sind Bereiche vorzugsweise oberhalb des Brennpunktes in Richtung der Vorrichtung zur Bündelung der Sonnenstrahlen zu verstehen. Je näher der tatsächliche Wirkbereich in der Nähe der Vorrichtung zur Bündelung liegt, desto größer ist die tatsächlich wirksame Fläche und geringer ist die Leistung pro Flächeneinheit.

Diese Ausgestaltung ist in Bezug auf Massenproduktion und Energieeffizienz optimiert und stellt nach erstem Ermessen die wirtschaftlichste der genannten Alternativen dar. Es wird vorgeschlagen, den Ausgangsstoff zu dünnen Platten zu verschmelzen.

Gemäß einer bevorzugten Ausführungsform wird die Schmelztemperatur auf konventionelle Weise durch den Einsatz eines Lasers und/oder eines Tunnelofens erzeugt, mit der Einschränkung, dass diese Schmelzeinrichtungen ihre Energie von Fotovoltaik-Feldern beziehen. Eine mögliche Ausführungsform weist also mindestens ein Fotovoltaik-Feld auf, wodurch die Energie für die konventionelle Schmelzeinrichtung aus Sonnenkraft gewonnen wird. Die Anlage arbeitet komplett autonom und ist nicht auf weitere Energiequellen angewiesen. Die Einschränkung auf die Kombination von konventioneller Schmelzeinrichtung und Fotovoltaik-Feldern wird aus zwei Gründen getroffen. Einerseits ist es technisch sinnvoll, die Vorrichtung in der Wüste zu stationieren, da dort der Ausgangsstoff lagert und eine sehr große Sonneneinstrahlung vorliegt. Außerdem ist der Energiebedarf der Anlage so mit preiswerter Sonnenenergie gedeckt, sodass der erzeugte Quetschsand auch preisgünstiger verkauft werden kann. Die mit Hilfe der Fotovoltaik-Anlagen umgewandelte Sonnenenergie kann sinnvollerweise in verschiedenen Zwischenspeichern bis zum tatsächlichen Bedarf der Verbraucher aufbehalten werden. Solche Zwischenspeicher können neben beispielsweise elektrischen Akkumulatoren auch mechanische Schwungräder, sowie hydraulische und pneumatische Speicher sein.

Eine weitere vorteilhafte Ausgestaltung ist, dass der Ausgangsstoff auf einer Unterlage, insbesondere einem Förderband, aufgeschichtet wird, auf diesem geschmolzen wird, abkühlt und direkt dem Zerkleinerungsprozess zur Erzeugung der Bruchstücke überführt wird. Das Förderband ist für die Massenproduktion des kantigen Mittelsandes (mS/MSa) bzw. Quetschsandes vorteilhaft, da somit ein kontinuierlicher Prozess gewährleistet wird. Die Kühlstrecke kann ebenfalls durch das Förderband realisiert werden, indem die Geschwindigkeit und/oder die Länge des Förderbandes entsprechend angepasst werden, um die Abkühlzeit zwischen Schmelzprozess und Zerkleinerungsprozess einhalten zu können. Es sind auch aktive Kühleinrichtungen, beispielsweise ein Gebläse oder ein elektrisches Kühlsystem, denkbar, die zu einer Beschleunigung des Prozesses führen können, allerdings hohe Energieaufwände zur Folge haben und nicht unbedingt erforderlich sind. Die optimale Länge und Geschwindigkeit des Förderbandes sollten jeweils in Versuchen ermittelt werden, da sie v.a. von Außentemperatur und tatsächlich erzielter Schmelztemperatur abhängen. An dieser Stelle sei erwähnt, dass die Energiebereitstellung zum Betrieb des Förderbandes ebenfalls über Fotovoltaik-Felder geschehen kann.

Die Unterlage ist durch die sehr hohen Schmelztemperaturen starken thermischen Belastungen ausgesetzt, weshalb spezielle, hitzefeste Beschichtungen (z.B. Keramiklegierungen) Einsatz finden können. Vorzugsweise wird der Ausgangstoff in ausreichender Höhe so aufgeschichtet, dass er nur in einem oberen Bereich, z.B. ¾, 2/3 oder ½, schmilzt und auf diese Weise gleichzeitig ein unterer Bereich, entsprechend ¼, 1/3, oder ½, eine Isolationsschicht zwischen Unterlage und dem geschmolzenen, dreidimensionalen Gebilde darstellt. Ein Haften des dreidimensionalen Gebildes an der Unterlage nach dem Schmelzvorgang wird so ebenfalls vermieden. Die Aufteilung sollte generell nur so gewählt werden, dass ein Anschmelzen an der Unterlage verhindert und eine gleichzeitig möglichst kleine Isolationsschicht erzeugt wird, da diese wieder abgeführt werden muss. Die Isolationsschicht, welche in der Regel einen Bereich aus gesinterten oder teilgeschmolzenen Sandkörnern darstellt, wird vor dem Zerkleinerungsprozess zweckmäßigerweise durch z.B. einen Sieb- oder kurzen Schleifprozess von der Verbundplatte getrennt, um die Reinheit des Endproduktes nicht herabzusenken.

Es ist sinnvoll, vor der Schmelzvorrichtung eine Siebeinrichtung einzusetzen, um den Ausgangsstoff einerseits vor gröberen Fremdpartikeln zu befreien und darüber hinaus eine Eingrenzung des Korngrößenbereichs zu ermöglichen. Es hat sich gezeigt, dass eine Eingrenzung des Korngrößenbereichs ein homogeneres Gebilde erzeugt und eine minimale Beschleunigung des Schmelzvorganges gewährleistet. Da diese Zeitersparnis jedoch nicht ausschlaggebend ist, liegt der Hauptaspekt des Siebvorganges im Befreien des Ausgangsstoffes von Fremdpartikeln, wie gröberem Gestein oder organischen Resten.

Es wird vorgeschlagen, das Förderband unmittelbar beim Siebprozess zu starten, durch die Schmelzeinrichtung hindurch zu führen und bis in den Zerkleinerungsprozess hinein laufen zu lassen. Damit wird das Verfahren vollständig automatisiert und gewährleistet eine hohe Produktionsrate.

Es wird außerdem die Aufrüstung des Förderbandes durch eine Abstreifplatte und/oder ein Rüttelband empfohlen, da durch diese Komponenten eine dünne, gleichmäßige Sandschicht erzielt werden kann, welche insbesondere durch eine verstellbare Abstreifplatte noch in ihrer Schichthöhe feinjustiert werden kann. Die Einstellung der Schichthöhe ist vor Allem für die Erzeugung der beschriebenen Isolationsschicht vorteilhaft.

Nach dem Zerkleinerungsprozess wird der Sand beispielsweise in entsprechende Auffangbehälter befördert und kann anschließend zum Abtransport oder zur Lagerung vorbereitet werden.

Erfindungsgemäß ist auch der Einsatz des beschriebenen Verfahrens mit einer autonomen Anlage in Form eines Wüstenfahrzeugs, beispielsweise ein Raupenfahrzeug, welches eine aus der Erfindung genannte Schmelzeinrichtung aufweist, die das Sonnenlicht z.B. durch einen mittigen Ausschnitt im Gefährt auf die unter dem Fahrzeug befindliche Sandschicht fokussiert. Die mittige Schmelzeinrichtung könnte in Form eines Turmaufbaus realisiert sein und ist bestenfalls 360° schwenkbar ausgeführt. Mithilfe eines beweglichen Heliostatenfeldes kann jeder mögliche Sonnenstand aufgefangen und zur beweglichen Schmelzeinrichtung gespiegelt werden. Alternativ, kann eine beweglich ausgeführte Einrichtung zur Bündelung von Sonnenstrahlen, z.B. eine Neig- und Schwenkbare Fresnel-Linse eingesetzt werden. Somit entstehen direkt unter dem Fahrzeug die geschmolzenen Zwischenprodukte, welche z.B. durch einen Rechen im hinteren Teil des Fahrzeugs oder in einem anderen, z.B. hinterherfahrenden, Fahrzeug zur Zerkleinerung gebracht werden. Es entstehen wiederrum Sandkörner, deren Form und Oberflächenrauheit hinsichtlich des Einsatzes in Beton verbessert bzw. ermöglicht wurden. Der kantige, betonfähige Sand kann entweder direkt im Fahrzeug gesammelt, oder anderweitig ausgeworfen und separat gesammelt werden.

Durch die stetige Verwitterung von Gebirgen, Bauwerken und allen weiteren Gesteinssedimenten, die letztendlich zu feinsten Staubpartikeln (Sahara-Staub) zerfallen, ist die Ausbreitung der Wüsten ein natürlicher Prozess und zum heutigen Stand unvermeidbar. In Zukunft ist mit unserem Verfahren eine dauerhafte Verfestigung von Wüstenrändern (in Zivilisationsnähe) durch den Einsatz autonomer Maschinen kostengünstig gewährleistet.

Die Erfindung soll nun anhand von Ausführungsbeispielen und den beigelegten schematischen Figuren erläutert werden.

Es zeigen:
Fig. 1 - eine erste bevorzugte Ausführungsform einer erfindungsgemäßen Vorrichtung zur Erzeugung von betonfähigem Sand
Fig. 2 - eine zweite bevorzugte Ausführungsform einer erfindungsgemäßen Vorrichtung zur Erzeugung von betonfähigem Sand
Fig. 3 - eine dritte bevorzugte Ausführungsform einer erfindungsgemäßen Vorrichtung zur Erzeugung von betonfähigem Sand
Fig. 4 - eine bevorzugte Ausführungsform eines erfindungsgemäßen Fahrzeugs zur Erzeugung von betonfähigem Sand

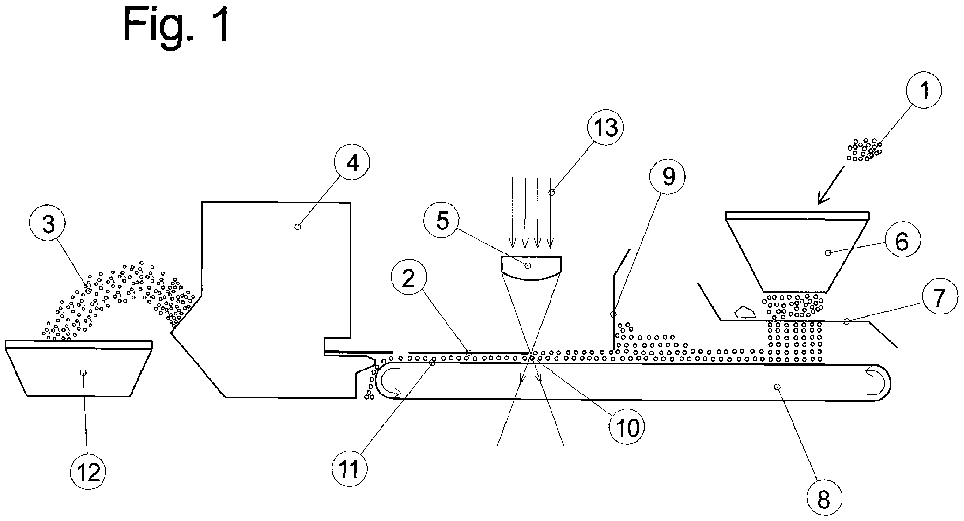

Die schematische Figur 1 zeigt eine mögliche Anlage zur Durchführung einer bevorzugten Ausführungsform eines erfindungsgemäßen Verfahrens. Dabei wird Wüstensand als Ausgangsstoff 1 über einen Vorratsbehälter 6 (z.B. trichterförmig) auf ein Sieb 7 aufgebracht, wodurch der Ausgangsstoff 1 von gröbsten Unreinheiten befreit wird. Der gesiebte Ausgangsstoff 1 gelangt nach dem Siebprozess unmittelbar auf ein geeignetes Förderband 8 als Unterlage. Dieses Förderband ist mit einem Abstreifblech 9 versehen, wodurch eine gleichmäßige Schicht mit regulierbarer Schichtdicke erzeugt wird. Wahlweise kann die Ebenheit der Stoffschicht mithilfe eines vibrierenden Rüttelbandes verbessert werden. Die gleichmäßige Sandschicht gelangt weiterhin über das Förderband 8 zur Ebene der thermischen Behandlung, indem sie durch die unmittelbare Nähe des Brennpunktes 10 einer Einrichtung 5 zur Bündelung von Sonnenstrahlen (z.B. plankonvexe Sammellinse) hindurchgeführt wird, sodass der Ausgangsstoff 1 schmilzt. Je größer die Fläche der Einrichtung 5 zur Bündelung von Sonnenstrahlen ist, desto mehr Sonnenlicht 13 wird aufgefangen und auf den Brennpunkt 10 fokussiert und dementsprechend größer ist die Leistung der Anlage. Vorzugsweise schmilzt bei der thermischen Behandlung nicht der gesamte, aufgeschichtete Ausgangsstoff 1, sondern lediglich ein oberer Bereich, z.B. die oberen zwei Drittel, um mit dem untersten Drittel eine Isolationsschicht 11 zur Unterlage, dem Förderband 8 zu erhalten. Eine vorteilhafte Schichtdicke liegt zwischen 5 und 50 mm abhängig von der Leistung der Anlage. Die nötige Einwirkzeit zur thermischen Verschmelzung kann über die Geschwindigkeit des Förderbandes 8 reguliert werden, sodass in einem ununterbrochenen Schmelzvorgang als Zwischenprodukt eine Verbundplatte 2 entsteht. Diese Verbundplatte besitzt beispielsweise die Maße 500 x 500 x 20 mm (L x B x H) und gelangt nach ausreichender Abkühlung auf dem Förderband 8 unmittelbar in eine Zerkleinerungsmaschine 4, z.B. einen Schredder, wodurch die Verbundplatte 2 in das Endprodukt 3, den Brechsand bzw. Quetschsand, insbesondere kantigen Mittelsand (mS/MSa) zerkleinert wird. Das Endprodukt 3 wird in einem geeigneten Behältnis 12 zum Abtransport aufgefangen und gelagert.

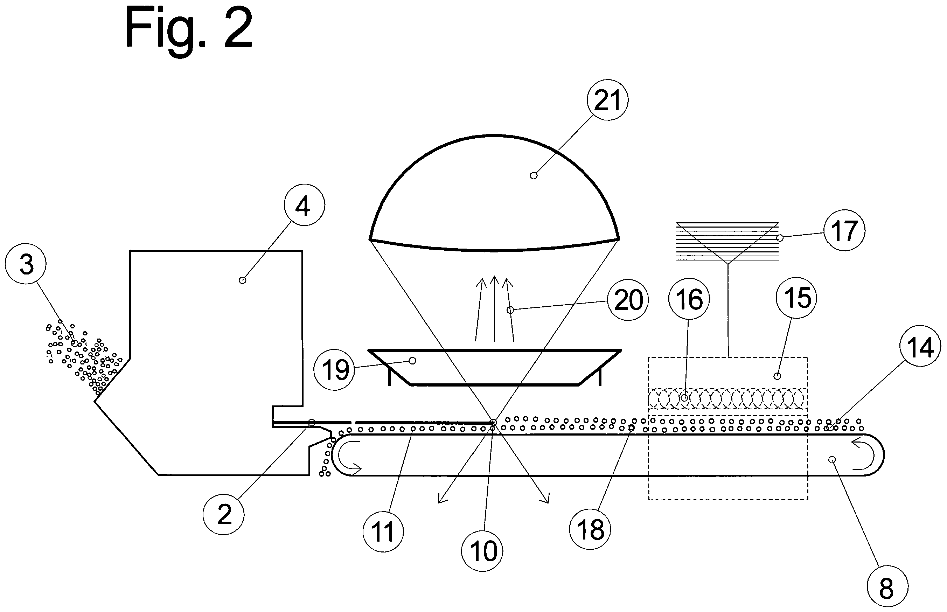

In Figur 2 ist eine weitere bevorzugte Ausführungsform einer erfindungsgemäßen Vorrichtung abgebildet. Der in Analogie zur Figur 1 an dieser Stelle bereits gesiebte, geebnete und aufgeschichtete Ausgangsstoff 14 gelangt über das Förderband 8 in einen Tunnelofen 15, der beispielsweise bei 1000 °C betrieben wird, wobei Hitzequellen 16 vorzugsweise oberhalb der Unterlage, dem Förderband 8 angebracht sind. Dadurch wird der vorbereitete Ausgangsstoff 14 unter den Hitzequellen 16 hindurch geführt. Es gelingt somit, den vorbereiteten Ausgangsstoff 14 auf eine Vorwärmtemperatur, z.B. 1000 °C zu erhitzen, sodass der Prozess insgesamt beschleunigt werden kann. Der Tunnelofen 15 wird über Fotovoltaik-Felder 17 mit der nötigen Energie versorgt, sodass hier keine weiteren Stromquellen nötig sind. Der vorgewärmte Ausgangsstoff 18 gelangt anschließend zur Schmelzvorrichtung, vorzugsweise einem Parabolspiegel 21 zur Konzentration von reflektiertem Sonnenlicht 20. Dieses Licht wird von einem oder mehreren Planspiegeln 19 zum Konzentrator, dem Parabolspiegel 21 reflektiert. Der bzw. die Planspiegel 19 sind so ausgebildet, dass sie vorzugsweise automatisch nach dem Sonnenstand ausgerichtet werden können. Der vorgewärmte Ausgangsstoff 18 schmilzt im Brennpunkt 10 des Konzentrators 21, wobei es vorteilhaft ist, mit dem unteren Drittel des aufgeschichteten Stoffes 18 eine Isolationsschicht 11 zur Unterlage, dem Förderband 8 herzustellen. Anschließend gelangt das verschmolzene Zwischenprodukt 2 in eine Zerkleinerungsmaschine 4, wodurch die Verbundplatte in das Endprodukt 3, den Brechsand bzw. Quetschsand, insbesondere kantigen Mittelsand (mS/MSa) zerkleinert wird. Der in diesem Verfahren erzeugte Quetschsand 3 kann sowohl zur Aufschüttung von Neuland im Meer als auch zu Herstellung von Beton eingesetzt werden, da er sich aufgrund seiner nun kantigen Geometrie verkeilt und dadurch für die nötige Stabilisierung im Baustoff sorgt.

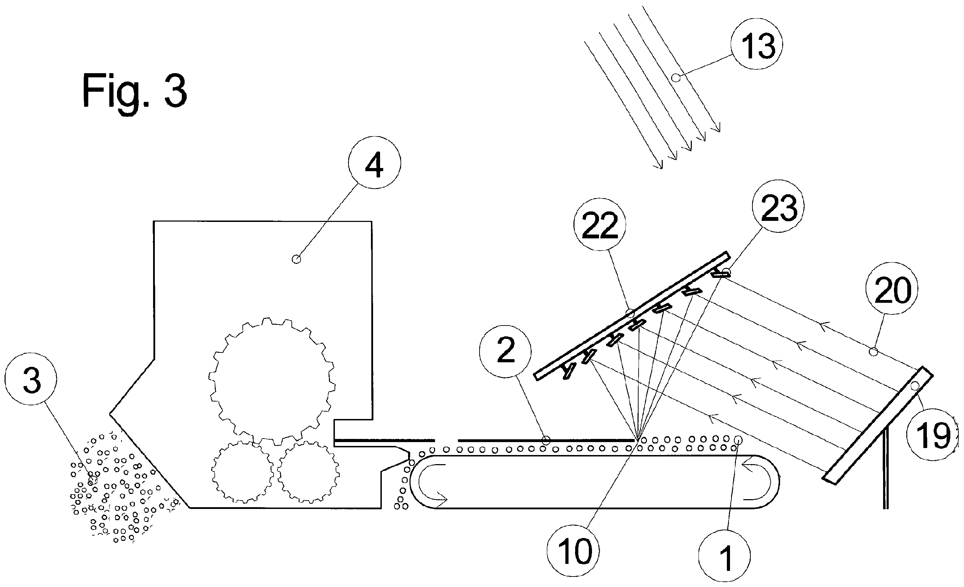

In Figur 3 wird ein Verfahren gezeigt, in dem der Ausgangsstoff 1, z.B. Feinsand (fS/FSa) bzw. Rundsand vorzugsweise Wüstensand, zunächst zum Schmelzen gebracht wird, sodass sich neue Korngrenzen ausbilden. Das daraus entstandene dreidimensionale Gebilde als Zwischenprodukt 2 wird anschließend abgekühlt und in einer Zerkleinerungsmaschine 4 auf Bruchstücke kleiner 2 mm zerbrochen. Die erzeugten Sandkörner des Endproduktes 3 entsprechen insbesondere der Kategorie Mittelsand (mS/MSa) und werden als Brechsand bzw. Quetschsand bezeichnet. Die hohen Schmelztemperaturen können, wie in dieser schematischen Figur gezeigt, durch die Bündelung von Sonnenstrahlen in einem Konzentrator 22, z.B. einer Anordnung von Spiegeln erreicht werden. Die einzelnen Spiegel 23, werden in einer bevorzugten Ausführungsform unterschiedlich geneigt ausgeführt, sodass das reflektierte Sonnenlicht 20 auf einen Wirkbereich 10 fokussiert wird. Das Sonnenlicht 13 wird dazu vorzugsweise über einen Planspiegel 19, vom Fachmann als Heliostatenfeld bezeichnet, auf den Konzentrator 22 abgebildet. Das Verfahren bietet eine langfristige Lösung zur Deckung des Bedarfs an Brechsand und erschließt den Wüstensand für die Bauindustrie. Der in diesem Verfahren hergestellte Quetschsand (künstlicher Brechsand) kann zur Herstellung von Beton und zur Neulandgewinnung im Meer eingesetzt werden und schont somit die endlichen Ressourcen des natürlichen Brechsandes aus v.a. Küstengebieten, Ozeanen und Flüssen.

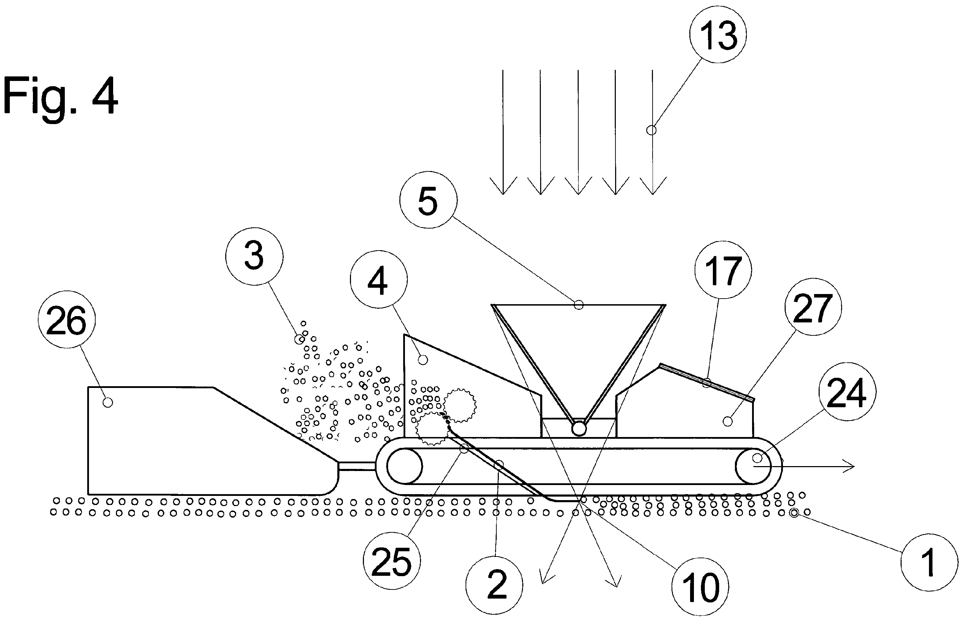

Die schematische Figur 4 zeigt eine mögliches Fahrzeug zur Durchführung einer bevorzugten Ausführungsform eines erfindungsgemäßen Verfahrens. Das als Raupenfahrzeug 24 ausgebildete Fahrzeug bewegt sich unter direkter Sonneneinstrahlung 13 über den Ausgangsstoff 1 hinweg. Gesteuert wird es vorzugsweise über eine Steuerkonsole 27 im vorderen Bereich des Fahrzeugs, bzw. über eine Sensorik, die ein autonomes Fahren in Bezug auf den Untergrund und den Sonnenstand ermöglicht. Das Gehäuse der Steuerkonsole 27 kann vorteilhafter Weise mit Fotovoltaik-Feldern 17 bedeckt sein, sodass keine weiteren Energiequellen zum Betrieb des Fahrzeugs nötig sind. Über eine Einrichtung 5 zur Bündelung von Sonnenstrahlen, z.B. eine Fresnel-Linse wird im Brennpunkt 10 die nötige Schmelztemperatur erzeugt, um den Ausgangsstoff 1 in das Zwischenprodukt 2, eine Verbundplatte zu überführen. Die Fresnel-Linse 5 ist dazu in einem Turm-Aufbau über dem Fahrzeug angebracht. Gleichzeitig wird über einen entsprechend breiten Schacht in Mitten des Fahrzeugs bzw. direkt unter der Fresnel-Linse 5 sichergestellt, dass das gebündelte Licht bis zum Untergrund nicht unterbrochen wird. Das Zwischenprodukt 2 wird über einen Rechen 25 im hinteren Teil des Fahrzeugs vom Untergrund getrennt und in Richtung der Zerkleinerungsmaschine 4 abgelenkt. Dort wird analog zu den oben beschriebenen Ausführungsformen das Endprodukt 3, der gebrochene Sand erzeugt. Durch einen Auffangbehälter 26, der wie ein Schlitten vom Raupenfahrzeug 24 gezogen wird, kann das Endprodukt 3 aufgefangen und z.B. zum Weitertransport zwischengelagert.

### Bezugszeichenliste:

- 1: Ausgangsstoff (Wüstensand, Feinsand, Rundsand)
- 2: Zwischenprodukt (dreidimensionales Gebilde, Verbundplatte)
- 3: Endprodukt (Brechsand, Quetschsand, kantiger Mittelsand (mS/MSa))
- 4: Zerkleinerungsmaschine (z.B. Schredder)
- 5: Einrichtung zur Bündelung von Sonnenstrahlen (z.B. Sammel- oder Fresnel-Linse)
- 6: Vorratsbehälter (z.B. Trichter)
- 7: Sieb
- 8: Förderband
- 9: Abstreifblech (z.B. höhenverstellbar)
- 10: Brennpunkt (bzw. Wirkbereich)
- 11: Isolationsschicht (z.B. bestehend aus dem Ausgangsstoff)
- 12: Auffangbehältnis (z.B. Container)
- 13: Sonnenlicht
- 14: aufgeschichteter Ausgangsstoff (gesiebt und geebnet)
- 15: Tunnelofen
- 16: Hitzequelle (z.B. Heizspirale)
- 17: Fotovoltaik-Felder (z.B. mit direkter Stromversorgung)
- 18: Vorgewärmter Ausgangsstoff (z.B. 1000 °C)
- 19: Planspiegel (z.B. Heliostatenfeld)
- 20: Reflektiertes Sonnenlicht (von Planspiegel zu Konzentrator)
- 21: Parabolspiegel
- 22: Konzentrator (z.B. Anordnung von mehreren Spiegeln)
- 23: Spiegel (z.B. alle unterschiedlich geneigt)
- 24: Raupenfahrzeug
- 25: Rechen
- 26: Auffangbehältnis (z.B. Schlitten)
- 27: Steuerkonsole (z.B. Führerkabine)

## Patentansprüche

1. Verfahren zur Herstellung von künstlichem Brechsand oder Quetschsand durch thermische Behandlung unter der Verwendung von Wüstensand in Form von Feinsand und/oder Rundsand als Ausgangsstoff (1),
wobei der Ausgangsstoff (1) durch
A) die Bündelung von Sonnenstrahlen,
und/oder
B) durch den Einsatz einer konventionellen Schmelzvorrichtung, welche ihre Energieversorgung über umgewandelte oder gespeicherte Sonnenkraft erlangt, auf eine Schmelztemperatur erhitzt wird,
wodurch jeweils mehrere Sandkörner miteinander zu einem dreidimensionalen Zwischenprodukt (2) verschmelzen,
wobei das so entstandene Zwischenprodukt (2) abgekühlt wird,
und zuletzt in einem Zerkleinerungsprozess auf eine Korngröße unter 2 mm zerkleinert wird, wobei ein Endprodukt (3) entsteht, welches sich hinsichtlich Form und Oberflächenrauheit vom Ausgangsstoff (1) unterscheidet.

2. Verfahren nach Patentanspruch 1,
wobei der Ausgangsstoff (1) bis zum Ausbilden neuer Korngrenzen oder darüber hinaus erhitzt wird.
und/oder
wobei der Ausgangsstoff (1) vor der thermischen Behandlung zunächst über ein geeignetes Sieb (7) von Unreinheiten befreit und/oder dadurch auch der Korngrö-ßenbereich des Ausgangsstoffes (1) für die Weiterverarbeitung begrenzt wird.

3. Verfahren nach Patentanspruch 1 oder 2,
wobei das Zwischenprodukt (2) soweit abgekühlt wird, dass es im Zerkleinerungsprozess ein sprödbrüchiges Verhalten aufweist.

4. Verfahren nach einem der Patentansprüche 1 bis 3,
wobei die Schmelztemperatur in Variante A durch die Bündelung der Sonnenstrahlen mit Hilfe mindestens einer Sammellinse (5) und/oder mindestens eines Spiegels, der insbesondere als Parabolspiegel (21) und/oder als eine Anordnung (22) von mindestens zwei Spiegeln mit unterschiedlichen Neigungswinkeln (23) zum Konzentrieren des Sonnenlichts auf einen gemeinsamen Brennpunkt bzw. Wirkbereich ausgeführt ist, erreicht wird.

5. Verfahren nach Patentanspruch 4,
wobei die Effizienz der mindestens einen Sammellinsen (5) und/oder des mindestens einen Spiegels zur Konzentration des Sonnenlichtes durch den Einsatz von reflektierenden Spiegeln (19), welche nach dem Sonnenstand ausgerichtet werden und das Sonnenlicht auf die Sammellinsen (5) oder den mindestens einen Spiegel zur Konzentration leiten, verbessert wird.

6. Verfahren nach einem der Patentansprüche 1 bis 3,
wobei die Schmelztemperatur in Variante B durch den Einsatz eines Tunnelofens (15) und/oder eines Lasers, welche ihre Energiezufuhr von Solar-Anlagen (17) beziehen, erreicht wird.

7. Verfahren nach einem der Patentansprüche 1 bis 6, wobei der Ausgangsstoff (1) zunächst durch
C) die Bündelung von Sonnenstrahlen,
und/oder
D) durch den Einsatz einer konventionellen Heizvorrichtung, welche ihre Energieversorgung über umgewandelte oder gespeicherte Sonnenkraft erlangt,
auf eine Vorwärmtemperatur erhitzt wird,
wobei die Vorwärmtemperatur unterhalb der Schmelztemperatur liegt und das Erhitzen auf die Vorwärmtemperatur örtlich getrennt vom Erhitzen auf die Schmelztemperatur durchgeführt wird,

8. Verfahren nach einem der Patentansprüche 1 bis 7, wobei der Ausgangsstoff (1) auf einer Unterlage aufgeschichtet und zu dem Zwischenprodukt (2) verschmolzen wird.

9. Verfahren nach Patentanspruch 8, wobei die Unterlage ein Förderband (8) ist und wobei der Ausgangsstoff (1) als dünne Schicht mit gleichmäßiger Schichtdicke auf das Förderband (8) gelangt, mittels dem er mindestens unmittelbar bis zur Stelle der thermischen Behandlung oder durch diese hindurch geführt wird, wobei die Einwirkdauer der thermischen Energie über die Geschwindigkeit des Förderbandes (8) reguliert wird.

10. Verfahren nach Anspruch 9, wobei eine Bearbeitungsfläche des Förderbandes (8), auf welchem der Ausgangsstoff (1) liegt und befördert wird, aus einem bis mindestens 2000 °C schmelzfesten Werkstoff oder einer Beschichtung besteht, welche/r außerdem ein leichtes Ablösen des thermisch behandelten Ausgangsstoffes (1) gewährleistet.

11. Verfahren nach Anspruch 10, wobei als dreidimensionales Zwischenprodukt (2) ein flächiges Zwischenprodukt (2) erzeugt wird, indem entweder
a) der Brennpunkt (10) einer Linse (5) auf eine Bearbeitungsfläche des Förderbandes (8), auf der der Ausgangsstoff (1) liegt, fokussiert wird, und der Ausgangsstoff (1) so durch Einbringen von Sonnenenergie zum Schmelzen gebracht wird, so dass jeweils mehrere Sandkörner thermisch miteinander zu dem flächigem Zwischenprodukt (2) verschmelzen,
und/oder
b) der Ausgangsstoff (1) über einen Laser zum Schmelzen gebracht wird, welcher seine Energieversorgung über umgewandelte und/oder gespeicherte Sonnenkraft erlangt,

12. Verfahren nach Anspruch 11,
wobei das Zwischenprodukt (2) anschließend auf unter 500 °C abgekühlt wird und zuletzt in einem Zerkleinerungsprozess in einem oder mehreren Schritten auf eine Korngröße zwischen 0,0125 und 2,0 mm zerkleinert wird, wobei das Endprodukt (3) entsteht.

13. Verfahren nach einem der Patentansprüche 7 bis 12,
wobei der Ausgangsstoff (1) nur in einem oberen Bereich geschmolzen wird, sodass ein unterer Bereich eine Isolationsschicht (11) zwischen Zwischenprodukt (2) und Unterlage darstellt.

14. Vorrichtung zur Herstellung von künstlichem Brechsand oder Quetschsand durch thermische Behandlung unter der Verwendung von Wüstensand in Form von Feinsand und/oder Rundsand als Ausgangsstoff (1), mit
- einer Schmelzvorrichtung zum Erhitzen des Ausgangsstoffes auf eine Schmelztemperatur, wobei die Schmelzvorrichtung eine Einrichtung zur Bündelung von Sonnenstrahlen oder einen Tunnelofen (15) und/oder einen Laser, welche ihre Energiezufuhr von Solar-Anlagen (17) beziehen, aufweist,
- einer der Schmelzvorrichtung nachgeschalteten Kühlstrecke
- einer der Kühlstrecke nachgeschalteten Zerkleinerungsmaschine (4).

15. Vorrichtung nach Anspruch 14, wobei die Kühlstrecke eine aktive Kühleinrichtung aufweist, und/oder die als Fahrzeug ausgebildet ist, und/oder die dazu eingerichtet ist, ein Verfahren nach einem der Ansprüche 1 bis 13 durchzuführen.

## Claims

1. A method for producing artificial broken sand or crushed sand by means of thermal treatment using desert sand in the form of fine sand and/or round sand as the starting material (1),
wherein the starting material (1) is heated
A) through the bundling of solar rays, and/or
B) through the use of a conventional melting device which achieves its energy supply using converted or stored solar power,
to a melting temperature,
whereby a plurality of sand grains is melted together in each case to form a three-dimensional intermediate product (2),
wherein the resulting intermediate product (2) is cooled,
and finally comminuted to a particle size of less than 2 mm, wherein an end product is produced which differs from the starting material (1) with respect to the shape and surface roughness.

2. The method according to claim 1,
wherein the starting material (1) is heated up to or beyond the formation of new grain boundaries, and/or
wherein impurities are first removed from the starting material (1) before the thermal treatment via an appropriate riddle (7), and/or the grain size range of the starting material (1) is accordingly limited for the further processing.

3. The method according to claim 1 or 2,
wherein the intermediate product (2) is cooled down until it comprises a brittle behaviour in the comminution process.

4. The method according to any one of claims 1 to 3,
wherein the melting temperature in variant A is achieved through the bundling of solar rays by means of at least one converging lens (5) and/or at least one mirror, which is constituted as a parabolic mirror (21), and/or an arrangement (22) of at least two mirrors with different angles of inclination (23) to concentrate the solar light onto a common focal point or respectively active region.

5. The method according to claim 4,
wherein the efficiency of the at least one converging lenses (5) and/or of the at least one mirror for the concentration of the solar light is improved through the use of reflecting mirrors (19), which are orientated according to the position of the sun and guide the solar light towards the converging lenses (5) or the at least one mirror for the concentration.

6. The method according to any one of claims 1 to 3,
wherein the melting temperature in variant B is achieved through the use of a tunnel furnace (15) and/or a laser which draws its energy supply from solar collectors (17).

7. The method according to any one of claims 1 to 6, wherein the starting material (1) is initially heated
C) through the bundling of solar rays and/or
D) through the use of a conventional heating device, which obtains its energy supply via converted or stored solar power,
to a pre-heating temperature,
wherein the pre-heating temperature is disposed below the melting temperature, and the heating to the pre-heating temperature is implemented with spatial separation from the heating to the melting temperature.

8. The method according to any one of claims 1 to 7, wherein the starting material (1) is deposited on a support surface and melted to form the intermediate product (2).

9. The method according to claim 8, wherein the support surface is a conveyor belt (8) and wherein the starting material (1) is placed onto the conveyor belt (8) as a thin layer with uniform layer thickness, by means of which it is guided at least directly to the position for the thermal treatment or through the latter, wherein the acting time of the thermal energy is controlled via the speed of the conveyor belt (8).

10. The method according to claim 9, wherein a processing surface of the conveyor belt (8), on which the starting material (1) is disposed and conveyed comprises a material or a coating resistant to melting up to at least 2000°C, which further guarantees an easy detachment of the thermally treated starting material (1).

11. The method according to claim 10, wherein, as the three-dimensional intermediate product (2), a flat intermediate product (2) is produced, in that either
a) the focal point (10) of a lens (5) is focused on a processing area of the conveyor belt (8) on which the starting material (1) is disposed, and the starting material (1) is caused to melt in this manner through the introduction of solar power, so that a plurality of sand grains is melted thermally together in each case to form the flat intermediate product (2), and/or
b) the starting material (1) is caused to melt via a laser, which obtains its energy supply using converted and/or stored solar power.

12. The method according to claim 11,
wherein the intermediate product (2) is then cooled to below 500°C and finally comminuted in one or more steps in a comminution process to a grain size between 0.0125 and 2.0 mm, wherein the end product (3) is produced.

13. The method according to any one of claims 7 to 12,
wherein the starting material (1) is melted only in an upper region, so that a lower region represents an insulation layer (11) between the intermediate product (2) and the support surface.

14. A device for the production of artificial broken or crushed sand using thermal treatment with the use of desert sand in the form of fine sand and/or round sand as the starting material (1), with
- a melting device for heating the starting material to melting temperature, wherein the melting device comprises a device for the bundling of solar rays or a tunnel furnace (15) and/or a laser, which draw their energy supply from solar collectors (17),
- with a cooling track disposed downstream of the melting device
- with a comminution machine (4) disposed downstream of the cooling track.

15. The device according to claim 14, wherein the cooling track comprises an active cooling device, and/or
which is constituted as a vehicle, and/or
which is set up to implement a method according to any one of claims 1 to 13.

## Revendications

1. Procédé pour fabriquer du sable de concassage ou du sable de broyage artificiel par traitement thermique en utilisant du sable du désert sous forme de sable fin et/ou de sable rond en tant que matériau de départ (1),
dans lequel le matériau de départ (1) est chauffé
A) par concentration de rayons solaires, et/ou
B) par l'utilisation d'un dispositif de fusion conventionnel dont l'énergie fournie provient d'énergie solaire convertie ou emmagasinée,
jusqu'à une température de fusion,
en sorte que les grains d'une pluralité de grains de sable fondent respectivement les uns avec les autres pour former un produit intermédiaire (2),
dans lequel le produit intermédiaire (2) ainsi obtenu est refroidi,
et est finalement fragmenté dans un processus de fragmentation jusqu'à une granulométrie inférieure à 2 mm, dans lequel un produit final (3) est obtenu qui se différencie du matériau de départ (1) en ce qui concerne la forme et la rugosité de surface.

2. Procédé selon la revendication 1,
dans lequel le matériau de départ (1) est chauffé jusqu'à ou au-delà de la formation de nouveaux joints de grains, et/ou
dans lequel le matériau de départ (1) est débarrassé des impuretés avant le traitement thermique tout d'abord via un crible (7) adapté et/ou la plage granulométrique du matériau de départ (1) est également limitée en vue du traitement ultérieur.

3. Procédé selon la revendication 1 ou 2,
dans lequel le produit intermédiaire (2) est refroidi tant qu'il présente un comportement fragile pendant le processus de fragmentation.

4. Procédé selon l'une des revendications 1 à 3,
dans lequel la température de fusion dans la variante A est obtenue par la concentration des faisceaux solaires à l'aide d'au moins une lentille collectrice (5) et/ou d'au moins un miroir qui est réalisé en particulier sous la forme d'un miroir parabolique (21) et/ou sous la forme d'un agencement (22) constitué d'au moins deux miroirs ayant différents angles d'inclinaison (23) pour concentrer la lumière solaire sur un foyer commun ou une zone active commune.

5. Procédé selon la revendication 4,
dans lequel l'efficacité des au moins une lentille collectrice (5) et/ou du au moins un miroir pour concentrer la lumière solaire en utilisant des miroirs réflecteurs (19) qui sont orientés en fonction de la position du soleil et qui guident la lumière solaire vers les lentilles collectrices (5) ou vers le au moins un miroir pour la concentration, est améliorée.

6. Procédé selon l'une des revendications 1 à 3,
dans lequel la température de fusion dans la variante B est obtenue en utilisant un four tunnel (15) et/ou un laser dont l'énergie est fournie par des installations solaires (17).

7. Procédé selon l'une des revendications 1 à 6,
dans lequel le matériau de départ (1) est tout d'abord chauffé
C) par concentration de rayons solaires,
et/ou
D) par l'utilisation d'un dispositif de chauffage conventionnel dont l'énergie fournie provient d'énergie solaire convertie ou emmagasinée,
jusqu'à une température de préchauffage,
dans lequel la température de préchauffage est inférieure à la température de fusion et le chauffage jusqu'à la température de préchauffage est réalisé localement et séparément du chauffage jusqu'à la température de fusion.

8. Procédé selon l'une des revendications 1 à 7, dans lequel le matériau de départ (1) est disposé en couches sur une surface de support et est fondu pour obtenir le produit interdit (2).

9. Procédé selon la revendication 8, dans lequel la surface de support est une bande de convoyage (8) et dans lequel le matériau de départ (1) est placé sur la bande de convoyage (8) sous la forme d'une couche mince ayant une épaisseur de couche uniforme, bande de convoyage au moyen de laquelle il est guidé au moins directement jusqu'à l'emplacement du traitement thermique ou à travers celui-ci, dans lequel la durée d'action de l'énergie thermique est régulée par la vitesse de la bande de convoyage (8).

10. Procédé selon la revendication 9, dans lequel une surface de traitement de la bande de convoyage (8), sur laquelle le matériau de départ (1) se trouve et est transporté, est constituée d'une matière fondue jusqu'à au moins 2 000 °C et d'un revêtement qui assure en outre un détachement aisé du matériau de départ (1) traité thermiquement.

11. Procédé selon la revendication 10, dans lequel un produit intermédiaire plat (2) est généré sous forme de produit intermédiaire tridimensionnel (2), dans lequel a) soit le foyer (10) d'une lentille (5) est focalisé sur une surface de traitement de la bande de convoyage (8) sur laquelle se trouve le matériau de départ (1), et le matériau de départ (1) est amené à fondre en appliquant de l'énergie solaire de sorte que les grains d'une pluralité de grains de sable fondent respectivement thermiquement les uns avec les autres jusqu'à l'obtention du produit intermédiaire plat (2),
et/ou
b) le matériau de départ (1) est amené à fondre par l'intermédiaire d'un laser dont l'énergie fournie provient d'énergie solaire convertie et/ou emmagasinée.

12. Procédé selon la revendication 11,
dans lequel le produit intermédiaire (2) est ensuite refroidi jusqu'à une température inférieure à 500 °C et est ensuite fragmenté jusqu'à une granulométrie comprise entre 0,0125 et 2,0 mm dans un processus de fragmentation en une ou plusieurs étapes, dans lequel le produit final (3) est généré.

13. Procédé selon l'une des revendications 7 à 12,
dans lequel le matériau de départ (1) est uniquement fondu dans une zone supérieure, de sorte qu'une zone inférieure constitue une couche d'isolation (11) entre le produit intermédiaire (2) et la surface de support.

14. Dispositif pour fabriquer du sable de concassage ou du sable de broyage artificiel par traitement thermique en utilisant du sable du désert sous forme de sable fin et/ou de sable rond en tant que matériau de départ (1), comportant :
- un dispositif de fusion pour chauffer le matériau de départ jusqu'à une température de fusion, dans lequel le dispositif de fusion comporte un dispositif pour concentrer des rayons solaires ou un four tunnel (15) et/ou un laser dont l'énergie est fournie par des installations solaires (17),
- un tronçon de refroidissement disposé en aval du dispositif de fusion,
- une machine de fragmentation (4) disposée en aval du tronçon de refroidissement.

15. Dispositif selon la revendication 14, dans lequel le tronçon de refroidissement comporte un dispositif de refroidissement actif et/ou est configuré sous la forme d'un véhicule et/ou qui est conçu pour mettre en oeuvre un procédé selon l'une des revendications 1 à 13.
